# EUROPEAN PATENT SPECIFICATION

(11) **EP 3 295 554 B1**
(45) Date of publication and mention of the grant of the patent: **24.04.2019**
(21) Application number: 16729405.7
(22) Date of filing: 06.05.2016
(51) Int. Cl.: H02N 2/18

(54) **VIBRATION ENERGY HARVESTER**
VIBRATIONSENERGIEGEWINNER
DISPOSITIF DE COLLECTE D'ÉNERGIE DE VIBRATION

(30) Priority: 11.05.2015 TR 201505633
(43) Date of publication of application: 21.03.2018
(73) Proprietor: Yeditepe Universitesi, 34755 Istanbul (TR)
(72) Inventor: TOPALOGLU, Nezih, 34755 Atasehir/Istanbul (TR); KARADAG, Cevat Volkan, Istanbul (TR)
(74) Representative: Dericioglu Kurt, Ekin
(86) International application number: PCT/TR2016/050138
(87) International publication number: WO 2016/182521

(56) References cited:
- EP-A1- 0 932 044
- EP-A1- 2 610 935
- CN-A- 103 986 367
- US-A1- 2010 076 714
- EICHHORN C ET AL: "A smart and self-sufficient frequency tunable vibration energy harvester;A smart and self-sufficient frequency tunable vibration energy harvester", JOURNAL OF MICROMECHANICS & MICROENGINEERING, INSTITUTE OF PHYSICS PUBLISHING, BRISTOL, GB, vol. 21, no. 10, 29 September 2011 (2011-09-29), page 104003, XP020212021, ISSN: 0960-1317, DOI: 10.1088/0960-1317/21/10/104003

## Description

### Field of the Invention

The present invention relates to a vibration energy harvester which enables to meet the energy requirement of a system by using the oscillation energy in the environment in oscillating environments.

### Background of the Invention

Vibration energy harvesting systems nowadays can be modelled as a spring mass damping system. The mass starts to oscillate due to the ambient vibration and acquires a kinetic energy. The mechanism generating electric energy from kinetic energy can be modelled as a production element. Mechanical losses in the system are modelled as damping element. Preferably piezoelectric materials are used in the said systems. Piezoelectric feature is the ability of the material to change electric field or electric potential of the material as a result of the mechanical pressure applied to some materials (particularly such as crystals and certain crystals; bone). This effect is directly related to the change in the polarization density in the material. If the material is not short circuit, the stress applied creates a voltage on the material.

When the said model is taken into consideration, it is seen that vibration energy harvesting systems can operate efficiently only in resonant state. That is to say, considerable energy is generated when the ambient vibration frequency and the natural frequency of the system overlap. However, frequency of the ambient vibration is variable in many applications, and for this reason, the energy obtained from vibration is insufficient in many situations. This prevents widespread use of vibration energy harvesting systems.

Various studies have been conducted to enable vibration energy harvesting systems to operate with high efficiency in a wider frequency range. The said systems are also known as broadband energy harvesters.

Nonlinear systems, which are one of the broadband energy harvesters, provide a nonlinear feature to the spring in the system by using many different mechanisms. United States patent document US8222754B1**,** an application in the state of the art, discloses about aiming to increase the equivalent spring constant of the system as the amplitude of the movement increase by restricting movement of the cantilever beam. Chinese patent document no. CN103354434A**,** an application in the state of the art, discloses about forming a structure having relaxed spring feature by arranging a magnet at the end of the piezoelectric cantilever beam and another magnet near the beam. The said nonlinear systems have non-stable structures, and even if it is possible to somewhat increase the wave width of the generator, it has certain disadvantages. Furthermore, wave width of nonlinear systems is very dependent on the amplitude of the ambient vibration, and at low amplitudes, nonlinear effect is not observed. Therefore, energy generation cannot be performed via broadband. Furthermore, hysteresis is observed in the frequency responses in the structures of the said systems, and the response of the system given to random vibrations is chaotic.

European patent document no. EP1843405B1**,** an application known in the state of the art, discloses about use of a plurality of systems having different natural frequencies. In the said system, a plurality of cantilever beam piezoelectric generators is used and the natural frequency of each generator differs from each other. Thus, one of these generators is brought into resonance in the ambient vibration frequency range and generates energy with high efficiency. However, since the other generators are not in resonant state, it is observed that the power density (power generation per unit volume of the entire system) is low.

Differing from the broadband energy harvesters in the state of the art, active natural frequency adjustment systems are also present in the art. There is an actuator in the said system and the actuator changes the system structure and adjusts the natural frequency. These systems are divided into two types, namely manual and automatic.

In the manual natural frequency adjustment systems, natural frequency of the generator is adjusted manually before the generator is fixed to the system. In the system known in the state of the art, a second magnet, whose distance can be adjusted, is arranged opposite to a piezoelectric cantilever beam, at the end of which a magnet is coupled; and the position of the said second magnet can be manually adjusted; thus by means of the change in the pushing force between the two magnets, the cantilever beam natural frequency can change. In another system in the state of the art, a mass comprised of a magnet is coupled to the outer cage via rubber materials. Lengths of the said rubber materials can be manually changed and thus effective spring constant and natural frequency of the system can be changed. However, the greatest disadvantage of the active natural frequency adjustment systems is infeasibility of automatic natural frequency adjustment. It is observed that manual natural frequency adjustment is not an effective method particularly in cases where the ambient vibration changes frequently.

In smart natural frequency adjustment systems where natural frequency is adjusted automatically, the actuator is generally controlled by a microcontroller. In the said systems, the feature of the power generated by the actuator should be determined in order to come into resonant state. In the United States patent document no. US8664834B2**,** an application in the state of the art, discloses about adjustment of a piezoelectric cantilever beam natural frequency by applying an axial load on the cantilever beam by a piezoelectric actuator. The greatest disadvantage of the said smart natural frequency adjustment systems where natural frequency is adjusted automatically is the requirement of consumption of power in order to keep the axial power amount applied by the piezoelectric actuator fixed. This particularly causes decrease in the system efficiency in cases where the ambient oscillation frequency does not change very much.

International patent document no. WO2011041679A2 and titled **"Apparatus and Method for Harvesting Electrical Energy from Mechanical Motion",** an application in the state of the art, discloses an apparatus which converts mechanical motions to electric energy by using a piezoelectric actuator. In the said document, when the oscillation of the energy harvesting apparatus (actuator) slows down, the electric energy that is generated decreases; and when the electric energy that is generated drops below a certain threshold, the generator apparatus can be stressed or struck by applying a force. The said striking and stressing can be performed by the help of a ViVa actuator.

### Problems Solved by the Invention

The objective of the present invention as defined by claim 1 is to enable automatic adjustment of the natural frequency and to provide a vibration energy harvester which is suitable for practical use.

Another objective of the present invention is to provide a vibration energy harvester in which the actuator has the feature of "self locking" and which thus reduces energy consumption of the actuator in cases where the ambient vibration is in fixed frequency thereby enabling the system to operate more efficiently.

A further objective of the present invention is to provide a vibration energy generator which has a high energy generation capacity and enables operation with high efficiency independent of the amplitude.

### Detailed Description of the Invention

A vibration energy harvester developed to fulfill the objectives of and that can be used with the present invention is illustrated in the accompanying figures, in which:

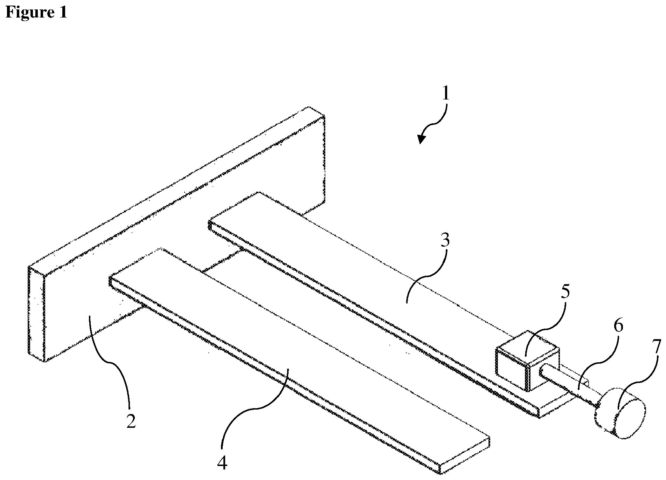

- **Figure 1.**: is a perspective view of the vibration energy harvester.
- **Figure 2.**: is a flowchart of the vibration energy harvester.

The components in the figures are given reference numbers as follows:
- **1.**: Energy harvester
- **2.**: Body
- **3.**: Adjustable beam
- **4.**: Fixed beam
- **5.**: Piezomotor
- **6.**: Shaft
- **7.**: Mass
- **100.**: Method
- **101.**: Sleep mode
- **102.**: Wake
- **103.**: Sufficient energy
- **104.**: Phase difference and frequency values
- **105.**: Calculating phase difference
- **106.**: Comparing with the threshold value
- **107.**: Actuator

The vibration energy harvester (1), which enables to meet the energy requirement of a system by using the ambient oscillation energy in environments wherein oscillation takes place, basically comprises
- at least one body (2) which is connected to an oscillating environment,
- at least one piezoelectric adjustable beam (3) which is arranged on the body (2) as a protrusion and protrudes outwards from the body (2),
- at least one piezoelectric fixed beam (4) which is arranged on the body (2) as a protrusion and protrudes outwards from the body (2),
- at least one piezomotor (5) which is placed on the adjustable beam (3),
- at least one shaft (6) which is coupled to one end of the piezomotor (5) and to which the movement provided by the piezomotor (5) is transferred,
- at least one mass (6) which is coupled to the end of the shaft (6),
- at least one control unit which is adapted to automatically adjust the natural frequency of the adjustable beam (3).

In the energy harvester (1) that can be used with present invention, an adjustable beam (3) and a fixed beam (4), which are produced of piezoelectric material, are coupled on the body (2) preferably via connecting members. The said adjustable beam (3) and the fixed beam (4) can convert the tension thereon to electric potential by means of the fact that they are piezoelectric. A piezomotor (5) is coupled on the adjustable beam (3), which is preferably in the form of a flat rod, by means of connecting members. Furthermore, the fixed beam (4), which is optionally a flat rod, is arranged so as to extend parallel to the adjustable beam (3) outwards from the body (2).

In a modified example, at least one accelerometer is used instead of the fixed beam (4). By means of using an accelerometer, total size of the system is enabled to be reduced, however the accelerometer causes the system efficiency to be low.

A shaft (6) is placed at the end of the piezomotor (5) provided on the adjustable beam (3) and a mass (7) is placed on the other end of the shaft (3). The mass (7) is produced of a desired material upon preference and can have the desired shape as preferred. The piezomotor (5) can move the mass (7) back and forth along the shaft (6) by means of the shaft (6). Natural frequency of the adjustable beam (3) can be changed by means of the linear movement of the mass (7). In other words, while the natural frequency of the fixed beam (4) remains fixed, the natural frequency of the adjustable beam (3) can be adjusted according to the desired value by means of the piezomotor (5).

There is provided at least one control unit which enables to automatically adjust the natural frequency of the adjustable beam (3). A microcontroller, microprocessor, FPGA or ASIC can be used as the control unit. The said control unit performs the process of automatic adjustment of the natural frequency of the adjustable beam (3) by using a method (100) algorithm.

The said method (100), in the case that ambient vibration occurs, basically controls whether the adjustable beam (3) is in resonant state or not, and if it is detected that the adjustable beam (3) is not in resonant state, it enables the mass (7) to be moved by means of the piezomotor (5) thereby enabling the adjustable beam (3) to brought into resonant state.

The way of operation of the method (100) operated in the control unit according to the invention comprises
- activating (102) the control unit from a sleep mode (101),
- interrogating whether there is sufficient energy in the energy storage unit (103),
- if it is detected that there is sufficient energy (103), measuring the phase difference and frequency values (104) of the adjustable beam (3) and the fixed beam (4),
- recording the measured phase difference and frequency values (104) in the memory of the control unit,
- calculating the frequency of the ambient vibration and the phase difference between the output voltages of the adjustable beam (3) and the fixed beam (4) by using the said recorded values (105),
- comparing the positive value of the calculated phase difference (105) with the predetermined threshold value (TV) (106),
- if the calculated phase difference (105) is smaller than the said threshold value (TV), position of the mass (7) is changed by means of the piezomotor (5) actuator (107),
- if the calculated phase difference (105) is greater than the said threshold value (TV), switching the control unit to sleep mode.

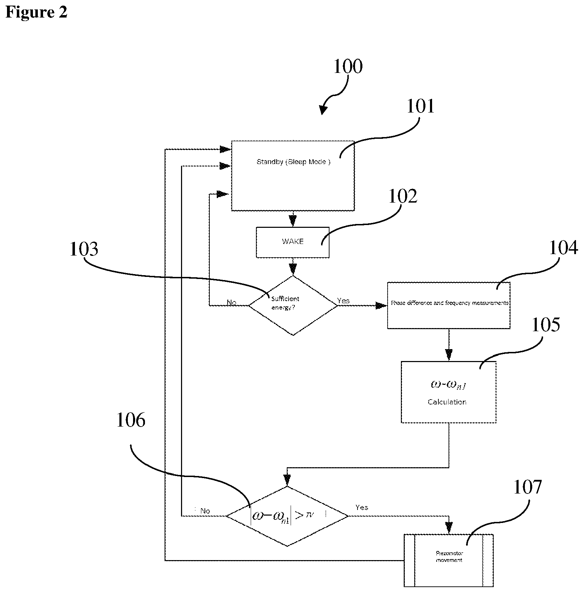

The method (100) shown in Figure 2 enables the control unit to be active only within predetermined resonance ranges with respect to energy efficiency (102), and to adjust the resonance values of only the adjustable beam (3) by enabling to make the required calculations. In the said method (100), the control unit cannot be active (sleep mode) (101) outside the predetermined resonance ranges, and thus energy efficiency of the system is enabled to be high.

When the determined sleep mode is over, the control unit is waken (102), and the control unit can control the energy amount and voltage values of at least one energy storage device, which is provided in the system and provides sufficient energy for operation of the system.

In a preferred embodiment of the invention, the control unit can evaluate the amount of energy stored by measuring the voltage values of the capacitor connected to the energy storage device.

If it is detected by the control unit that there is sufficient energy in the energy storage device for operation of the system (103), the phase difference between the adjustable beam (3) and the fixed beam (4), and the voltage values of the frequency are measured (104) and then recorded by the control unit for a certain period of time. The frequency of the ambient vibration and the phase difference between the output voltages of the adjustable beam (3) and the fixed beam (4) are calculated (105). Instantaneous natural frequency (ωn1) of the adjustable beam (3) can be calculated by the control unit by using the phase difference calculated (105) by the control unit. In the said calculation process, the adjustable beam (3) and the fixed beam (4) are modelled as a linear spring-mass-damping system, and it is considered that the value of the damping ratio of the adjustable beam (3) and the fixed beam (4) is known.

After measurement of the natural frequency of the adjustable beam (3), the control unit calculates the difference (ω - ωn1) between the ambient frequency (co) and the natural frequency of the adjustable beam (3) (105). Then the control unit compares the positive value of the differences between the ambient frequency (co) and the natural frequency of the adjustable beam (3) with a predetermined threshold value (TV) (106). If the difference is smaller than the threshold value, it is accepted that the adjustable beam (3) is in resonant state and it is decided not to operate the piezomotor (5), and the control unit returns to sleep mode (101). If the difference is greater than the threshold value, the piezomotor (5) actuator (107) enables the mass (7) to be brought to the determined position for a predetermined period of time. It is sufficient to look at the sign of the (ω - ωn1) value in order to determine the movement direction of the mass (7). After this process, the control unit returns to sleep mode (101).

Thanks to the fact that the energy harvester (1) has the feature of self-locking by means of its method (100), the actuator is enabled not to consume energy in cases where the ambient vibration is in fixed frequency and thus the system is enabled to be operated more efficiently. Furthermore, by means of the method (100) run in the control unit, the energy harvester (1) has high energy production and can be operated with high efficiency independent of amplitude.

## Claims

1. A method (100) for operating a control unit of an energy harvester (1), **comprising** the steps of
- activating (102) the control unit from a sleep mode (101),
- interrogating whether there is sufficient energy in an energy storage unit (103),
- if it is detected that there is sufficient energy (103), measuring the phase difference and frequency values (104) of an adjustable beam (3) and a fixed beam (4),
- recording the measured phase difference and frequency values (104) in the memory of the control unit,
- calculating the frequency of the ambient vibration and the phase difference between the output voltages of the adjustable beam (3) and the fixed beam (4) by using the said recorded values (105),
- comparing the positive value of the calculated phase difference (105) with a predetermined threshold value (TV) (106),
- if the calculated phase difference (105) is smaller than the said threshold value (TV), position of the mass (7) is changed by means of a piezomotor (5)(107),
- if the calculated phase difference (105) is greater than the said threshold value (TV), switching the control unit to the sleep mode.

## Patentansprüche

1. Verfahren (100) zum Betreiben einer Steuereinheit einer Energieerntemaschine (1), **umfassend** die Schritte von
- Aktivieren (102) der Steuereinheit aus einem Schlafmodus (101),
- Abfragen, ob es genügend Energie in einer Energiespeichereinheit (103) gibt,
- wenn erkannt wird, dass genügend Energie (103) vorhanden ist, Messen der Phasendifferenz- und Frequenzwerte (104) eines einstellbaren Strahls (3) und eines festen Strahls (4),
- Aufzeichnen der gemessenen Phasendifferenz- und Frequenzwerte (104) im Speicher der Steuereinheit,
- Berechnen der Frequenz der Umgebungsvibration und der Phasendifferenz zwischen den Ausgangsspannungen des einstellbaren Strahls (3) und des festen Strahls (4) unter Verwendung der aufgezeichneten Werte (105),
- Vergleichen des positiven Wertes der berechneten Phasendifferenz (105) mit einem vorbestimmten Grenzwert (TV) (106),
- wenn die berechnete Phasendifferenz (105) kleiner als der Grenzwert (TV) ist, wird die Position der Masse (7) mittels eines Piezomotors (5) (107) verändert,
- wenn die berechnete Phasendifferenz (105) größer als der Grenzwert (TV) ist, wird das Steuereinheit in den Schlafmodus versetzt.

## Revendications

1. Procédé (100) pour faire fonctionner une unité de commande d'un dispositif de collecteur d'énergie (1), **comprenant** les étapes consistant à
- activer (102) la centrale à partir d'un mode veille (101),
- vérifier s'il y a suffisamment d'énergie dans une unité de stockage d'énergie (103),
- s'il est détecté qu'il y a suffisamment d'énergie (103), mesurer les valeurs de différence de phase et de fréquence (104) d'un faisceau réglable (3) et d'un faisceau fixe (4),
- enregistrer les valeurs de différence de phase et de fréquence mesurées (104) dans la mémoire de l'unité de commande,
- calculer la fréquence de la vibration ambiante et la différence de phase entre les tensions de sortie du faisceau réglable (3) et du faisceau fixe (4) en utilisant lesdites valeurs enregistrées (105),
- comparer la valeur positive de la différence de phase calculée (105) avec une valeur seuil prédéterminée (TV) (106),
- si la différence de phase calculée (105) est inférieure à ladite valeur seuil (TV), la position de la masse (7) est modifiée au moyen d'un piézomoteur (5)(107),
- si la différence de phase calculée (105) est supérieure à ladite valeur seuil (TV), la commutation de l'unité de commande en mode veille.
